Europäisches Patentamt

European Patent Office

Office européen des brevets

(19)

(11) **EP 1 436 712 B1**

(12) **FASCICULE DE BREVET EUROPEEN**

(45) Date de publication et mention
de la délivrance du brevet:
**02.03.2005 Bulletin 2005/09**

(21) Numéro de dépôt: **02785541.0**

(22) Date de dépôt: **11.10.2002**

(51) Int Cl.⁷: **G06F 13/38**

(86) Numéro de dépôt international:
**PCT/FR2002/003479**

(87) Numéro de publication internationale:
**WO 2003/034247 (24.04.2003 Gazette 2003/17)**

(54) **RECEPTEUR DE DONNEES ASYNCHRONES COMPRENANT DES MOYENS DE BASCULEMENT EN UN MODE VEILLE**

EMPFÄNGER VON ASYNCHRONEN DATEN MIT SCHALTVORRICHTUNG ZUM SCHLAFMODUSBETRIEB

ASYNCHRONOUS DATA RECEIVER COMPRISING MEANS FOR STANDBY MODE SWITCHOVER

(84) Etats contractants désignés:
**DE FR GB IT**

(30) Priorité: **15.10.2001 FR 0113274**

(43) Date de publication de la demande:
**14.07.2004 Bulletin 2004/29**

(73) Titulaire: **Stmicroelectronics SA**
**F-92120 Montrouge (FR)**

(72) Inventeurs:
• **RUAT, Ludovic**
**F-13119 Savourin (FR)**

• **KINOWSKI, Paul**
**F-13100 Aix-en-Provence (FR)**
• **CZAJOR, Alexander**
**F-13320 Bouc Bel Air (FR)**

(74) Mandataire: **Marchand, André**
**OMNIPAT,**
**24 Place des Martyrs de la Résistance**
**13100 Aix-en-Provence (FR)**

(56) Documents cités:
**EP-A- 0 666 529        EP-A- 1 134 667**
**US-A- 5 713 028**

**Description**

La présente invention concerne le domaine des dispositifs de transmission de données asynchrones généralement appelés des "UARTs" (Universal Asynchronous Receiver Transceiver).

La présente invention concerne plus particulièrement la mise en veille et l'activation d'un récepteur de données asynchrones.

Les données asynchrones sont généralement transmises au moyen de trame asynchrones comprenant un ou plusieurs caractères standards. De tels caractères standards comprennent généralement 10 bits parmi lesquels se trouvent 8 bits de données précédés d'un bit de "start" (bit de démarrage) et suivis d'un bit de stop. A l'inverse des transmissions de données synchrones, le récepteur ne reçoit pas le signal d'horloge de l'émetteur, de sorte que les horloges respectives de l'émetteur et du récepteur doivent présenter l'une relativement à l'autre une déviation n'excédant pas une certaine valeur, pour que les données puissent être transmises correctement.

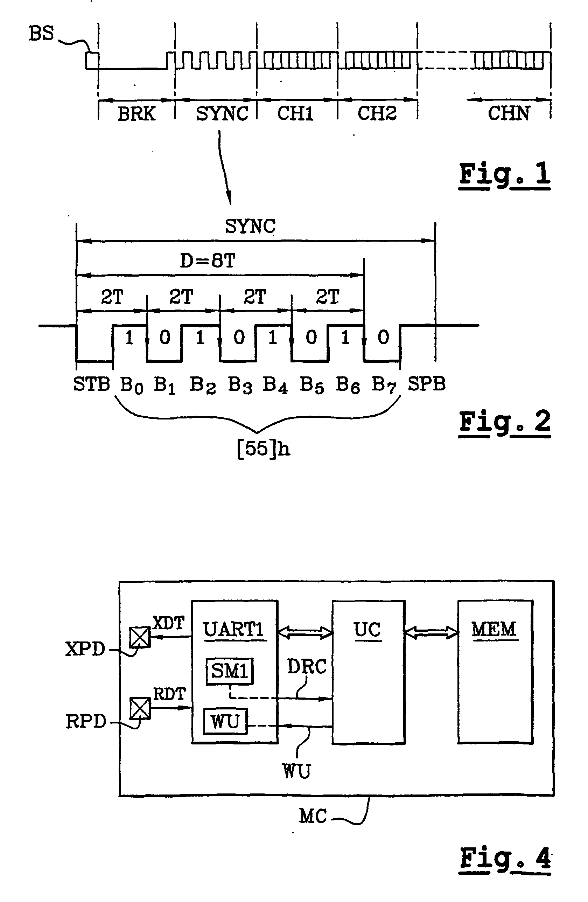

Pour fixer les idées, la figure 1 représente le format d'une trame asynchrone selon le protocole LIN ("Local Interconnect Network"). Cette trame comprend tout d'abord un caractère d'interruption BRK comprenant un nombre déterminé de bits à 0 et un dernier bit égal à 1 ("extra bit"), puis un caractère de synchronisation SYNC, et ensuite des caractères de données CH1, CH2...CHN. Le caractère CH1 est utilisable comme champ d'identification pour permettre des liaisons multipoint entre un dispositif maître et des dispositifs esclaves.

Le caractère SYNC est représenté plus en détail en figure 2 et est égal à [55]h en notation hexadécimale, soit le caractère "10101010" en binaire (bits B0 à B7). Ce caractère de synchronisation étant précédé d'un bit de start STB à 0 et suivi d'un bit de stop à SPB 1, on dispose en tout de 5 fronts descendants pour accorder un signal d'horloge local au signal d'horloge de référence du caractère SYNC. La durée s'écoulant entre les 5 fronts descendants étant égale à 8 fois la période T du signal d'horloge de référence, la mesure de cette durée permet d'en déduire la période T de référence et d'y accorder celle du signal d'horloge local.

Le premier caractère de données CH1 est un caractère d'identification qui définit les attributs du message formé par les caractères de données CH2,...CHN. Les quatre premiers bits de ce caractère d'identification contiennent l'identification du destinataire du message, les deux bits suivants précisent la longueur du message et les deux derniers bits sont des bits de parité.

La réunion du caractère d'interruption BRK, du caractère de synchronisation SYNC et du caractère d'identification CH1 constitue le champ d'en-tête ("header field") d'une trame LIN.

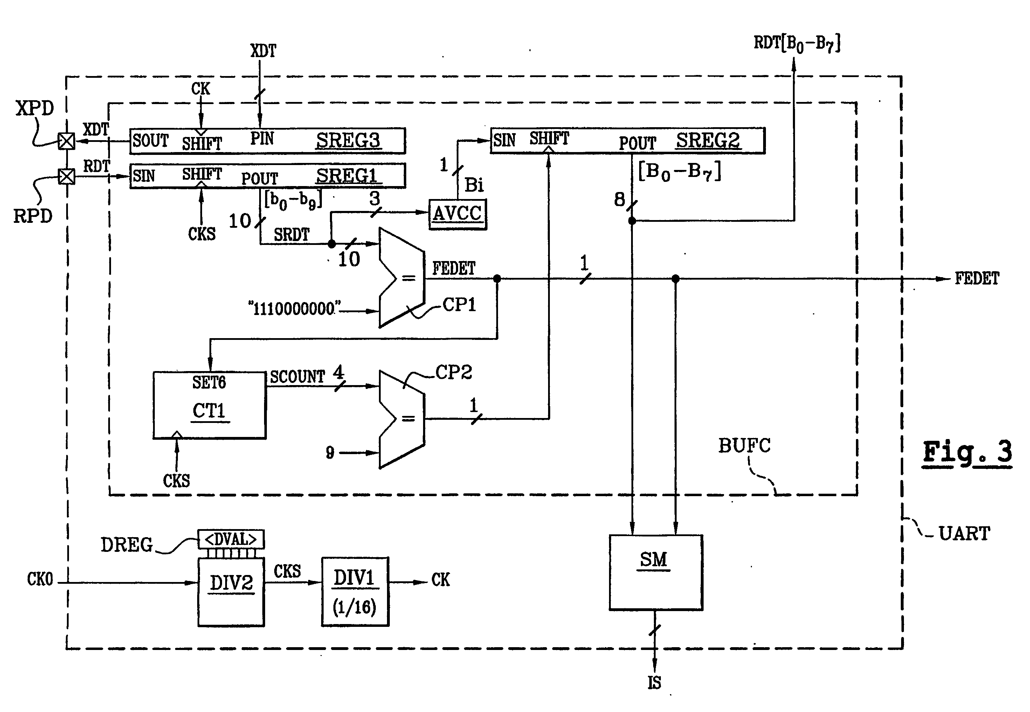

La figure 3 représente de façon schématique l'architecture d'un circuit UART prévu pour recevoir de telles trames asynchrones.

Un signal d'horloge local CK est délivré par un diviseur DIV1, généralement un diviseur par 16, recevant en entrée un signal d'échantillonnage CKS. Le signal CKS est lui-même délivré par un diviseur programmable DIV2 recevant en entrée un signal d'horloge primaire CK0. Le rapport entre la fréquence du signal CK0 et celle du signal CKS est déterminé par une valeur DVAL chargée dans un registre DREG du diviseur programmable.

Le circuit UART comprend en outre un circuit tampon BUFC et une machine d'état SM qui identifie les caractères d'interruption BRK et de synchronisation SYNC, et délivre des signaux d'information IS au milieu extérieur. On considérera par la suite, à titre d'exemple non limitatif, que le "milieu extérieur" est l'unité centrale d'un microcontrôleur (non représentée) au sein duquel le circuit UART est implanté. Les signaux IS indiquent par exemple qu'un caractère SYNC est en cours de réception, qu'une donnée reçue est disponible en lecture dans le circuit BUFC, etc..

Le circuit tampon BUFC comprend ici deux registres de réception SREG1, SREG2, un registre d'émission SREG3, un compteur CT1 de 4 bits (compteur par 16), deux comparateurs logiques CP1, CP2 et un circuit AVCC. Le registre SREG1 est un registre à décalage de 10 bits dont l'entrée SHIFT est cadencée par le signal CKS. Il reçoit des données RDT sur une entrée série SIN connectée à une borne de réception de données RPD, et délivre sur une sortie parallèle POUT des données SRDT échantillonnées (bits b0 à b9). Les données SRDT sont appliquées à l'entrée du circuit AVCC dont la sortie délivre un bit Bi qui est envoyé sur une entrée série SIN du registre SREG2. Chaque bit Bi délivré par le circuit AVCC est classiquement égal à la valeur majoritaire des échantillons de rangs 7, 8 et 9 (bits b7 à b9) présents dans le registre SREG1.

Les données SRDT sont également appliquées sur une entrée du comparateur CP1 dont l'autre entrée reçoit un nombre de référence "1110000000", formant un critère de détection de fronts descendants. Le comparateur CP1 délivre un signal FEDET qui est communiqué au milieu extérieur et est également appliqué sur une entrée de remise à 6 (entrée "SET 6") du compteur CT1, lequel est cadencé par le signal CKS. Le compteur CT1 délivre un signal SCOUNT de comptage d'échantillons qui est appliqué sur une entrée du comparateur CP2, dont l'autre entrée reçoit sous forme binaire un nombre de référence égal à 9 en base 10. La sortie du comparateur CP2 pilote l'entrée de décalage SHIFT du registre SREG2. Enfin, le registre SREG3 est un registre à décalage cadencé par le signal d'horloge local CK, recevant des données XDT sur une entrée parallèle PIN et délivrant des données série XDT sur une sortie SOUT connectée à une borne XPD.

Après réception du caractère SYNC, les données présentes dans les caractères CH1, CH2... sont reçues bit à bit, un bit de donnée Bi délivré par le circuit AVCC (valeur majoritaire des échantillons b7 à b9) étant chargé dans le registre SREG2 tous les 16 cycles du signal CKS, soit à chaque cycle du signal d'horloge local CK. Le chargement d'un bit Bi s'effectue au dixième cycle de comptage du compteur CT1, lorsque la sortie du comparateur CP2 passe à 1. Les données reçues RDT sont stockées dans le registre SREG2 par groupe de 8 bits B0-B7 et peuvent être lues par l'intermédiaire d'une sortie parallèle POUT de ce registre.

Le caractère SYNC représenté en figure 2 permet au circuit UART de déterminer la valeur DVAL à placer dans le diviseur DIV2 pour obtenir une faible déviation du signal d'horloge local CK. Cette valeur est telle que la période Ts du signal d'échantillonnage CKS doit être égale à :

$$Ts = D/(8*16)$$

D étant la durée mesurée entre les cinq fronts descendants du caractère de synchronisation, soit huit périodes T de l'horloge de référence. Le calcul de DVAL peut être assuré par un circuit à logique câblée spécifique (non représenté) associé à la machine d'état SM, ou par une unité centrale de microcontrôleur.

Il, apparaît en pratique que le circuit UART délivre au milieu extérieur divers signaux et diverses données lorsqu'un message est en cours de réception, et que le milieu extérieur effectue diverses opérations, notamment de lecture, qui ne sont pas utiles si le message ne lui est pas destiné.

La présente invention a ainsi pour objectif de décharger le milieu extérieur de tâches inutiles en lui évitant de traiter des caractères qui ne lui sont pas destinés.

A cet effet, la présente invention prévoit un dispositif récepteur de trames asynchrones débutant par un champ d'en-tête, comprenant des moyens de basculement dans un mode veille, le mode veille comprenant le filtrage d'au moins un signal susceptible d'être émis par le dispositif récepteur pendant la réception d'un champ d'en-tête, des moyens de reconnaissance de champ d'en-tête, et des moyens pour quitter le mode veille lorsqu'un champ d'en-tête valide est reconnu.

Selon un mode de réalisation, les moyens de reconnaissance de champ d'en-tête sont agencés pour reconnaître un champ d'en-tête valide lorsque le champ d'en-tête comprend un caractère d'interruption composé de bits ayant tous la même valeur.

Selon un mode de réalisation, les moyens de reconnaissance de champ d'en-tête sont agencés pour reconnaître un champ d'en-tête valide lorsque le champ d'en-tête comprend un caractère de synchronisation.

Selon un mode de réalisation, les moyens de reconnaissance de champ d'en-tête sont agencés pour reconnaître un champ d'en-tête valide lorsque le champ d'en-tête comprend un caractère d'identification.

Selon un mode de réalisation, les moyens de reconnaissance de champ d'en-tête sont agencés pour reconnaître un champ d'en-tête valide lorsque le champ d'en-tête comprend un caractère d'identification correspondant à une identité du dispositif.

Selon un mode de réalisation, le mode veille est contrôlé par un drapeau pouvant être forcé à une valeur déterminée depuis l'extérieur du dispositif.

Selon un mode de réalisation, les moyens de reconnaissance de champ d'en-tête et les moyens pour quitter le mode veille lorsqu'un champ d'en-tête valide est reconnu, comprennent une machine d'état.

La présente invention concerne également un circuit intégré, comprenant un dispositif selon l'invention.

La présente invention concerne également un microcontrôleur comprenant un dispositif selon l'invention.

La présente invention concerne également un procédé de réception de trames asynchrones débutant par un champ d'en-tête, mis en oeuvre au moyen d'un dispositif récepteur de trames comprenant un mode veille contrôlé par un moyen déterminé, le mode veille comprenant le filtrage d'au moins un signal susceptible d'être émis par le dispositif récepteur pendant la réception d'un champ d'en-tête, et comprenant une étape de reconnaissance de champ d'en-tête et une action sur le moyen de contrôle du mode veille lorsqu'un champ d'en-tête est reconnu, de manière à faire sortir le dispositif récepteur du mode veille si celui-ci se trouve en mode veille.

Selon un mode de réalisation, le moyen de contrôle du mode veille comprend un drapeau et l'action sur le moyen de contrôle du mode veille comprend le fait dé forcer le drapeau à une valeur déterminée.

Selon un mode de réalisation, un champ d'en-tête est reconnu valide lorsqu'il comprend un caractère d'interruption composé de bits ayant tous la même valeur.

Selon un mode de réalisation, un champ d'en-tête est reconnu valide lorsqu'il comprend un caractère de synchronisation.

Selon un mode de réalisation, un champ d'en-tête est reconnu valide lorsqu'il comprend un caractère d'identification.

Selon un mode de réalisation, un champ d'en-tête est reconnu valide lorsqu'il comprend un caractère d'identification qui correspond à une identité du dispositif.

Selon un mode de réalisation, les étapes de reconnaissance de champ d'en-tête et l'action sur le moyen de contrôle du mode veille lorsqu'un champ d'en-tête est reconnu, sont effectuées au moyen d'une machine d'état.

Ces objets, caractéristiques et avantages ainsi que d'autres de la présente invention seront exposés plus en détail dans la description suivante d'un exemple de réalisation d'un dispositif UART selon l'invention, faite à titre non limitatif en relation avec les figures jointes parmi lesquelles :

-    la figure 1 précédemment décrite représente une trame asynchrone selon le protocole LIN,
-    la figure 2 précédemment décrite représente un caractère de synchronisation,
-    la figure 3 précédemment décrite représente un circuit UART classique,
-    la figure 4 représente un microcontrôleur comprenant un circuit UART1 selon l'invention, et
-    la figure 5 représente une machine d'état selon l'invention présente dans le circuit UART1 de la figure 4.

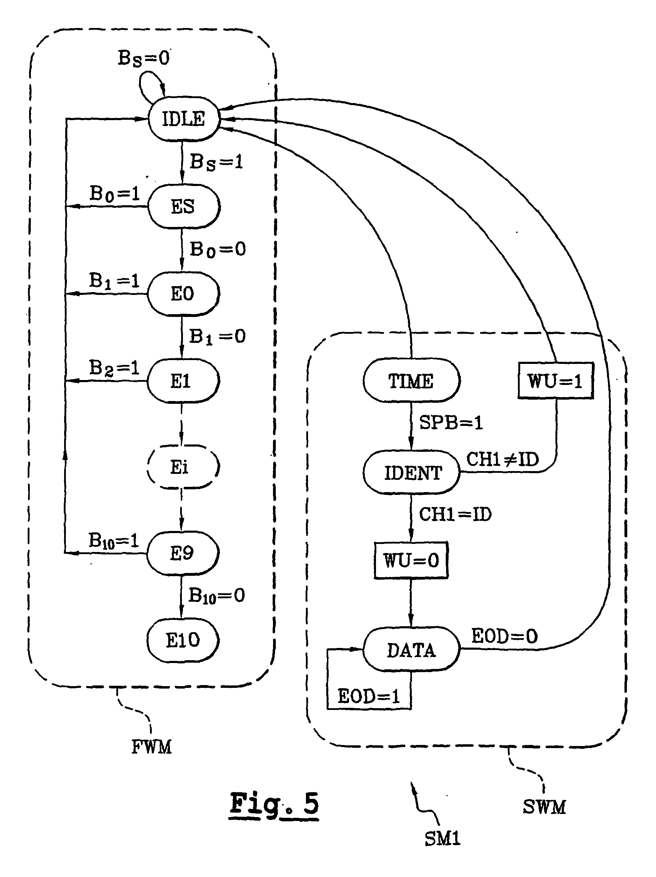

La figure 4 représente schématiquement un microcontrôleur MC comprenant sur une même puce de silicium une unité centrale UC, une mémoire programme MEM, et un circuit UART1 selon l'invention. Le circuit UART1 est connecté à des plages d'entrée/sortie RPD/XPD du circuit intégré.

L'architecture générale du circuit UART1 est conforme à celle du circuit UART classique décrit au préambule en relation avec la figure 3, et ne sera pas décrite à nouveau. L'unité centrale UC utilise le circuit UART1 pour l'émission et la réception de données asynchrones via les plages XPD, RPD. Le circuit UART1 envoie à l'unité centrale un signal DRC ("Data Received") lorsque des données RDT sont reçues et sont disponibles en lecture dans son registre de réception (registre SREG2, fig. 3), le signal DRC étant par exemple appliqué sur un décodeur d'interruption de l'unité centrale. Le signal DRC est l'un des signaux d'information IS délivré par le circuit UART1 à l'attention du milieu extérieur (seul le signal DRC étant représenté en figure 4).

Le circuit UART1 se distingue du circuit UART classique par le fait qu'il comprend une machine d'état SM1 prévue pour gérer un mode veille dans lequel au moins le signal DRC n'est pas émis. Le mode veille est contrôlé ici par un drapeau de mise en veille WU égal par exemple à 1 en mode veille et à 0 en mode actif. Le drapeau WU est stocké dans un registre déterminé du circuit UART1, et peut être forcé à 1 par l'unité centrale UC pour placer le circuit UART1 dans le mode veille.

Selon l'invention toujours, le circuit UART1 ne quitte le mode veille que lorsqu'il a détecté un début de trame valide, d'une manière qui sera maintenant décrite en se référant à titre d'exemple non limitatif au protocole LIN.

Dans une trame LIN du type décrit au préambule, le caractère d'interruption BRK consiste en une suite de 13 bits à 0 cadencés par un signal d'horloge de référence. Pour tenir compte d'un décalage entre ce signal et le signal d'horloge local, la détection de ce caractère est réalisée par l'identification d'au moins 11 bits à 0. Ce nombre de 11 bits est choisi par convention afin de tolérer une déviation d'horloge de l'ordre de $\pm 15\%$.

La machine d'état SM1 du circuit UART1 comporte ainsi un premier module FWM formant un organe de détection du caractère d'interruption BRK.

Un exemple de réalisation du module FWM de la machine d'état SM1 est représenté en figure 5. La réception d'un bit BS à 1 (bit BS précédant un caractère BRK, Cf. fig. 1) déclenche le passage d'un état d'attente IDLE à un état intermédiaire ES. La réception du bit suivant B0 selon qu'il vaut 0, respectivement 1, provoque le passage à un état intermédiaire E0 ou, respectivement, le retour à l'état IDLE. Dans l'état E0, la réception du deuxième bit B1 suivant le bit BS, selon qu'il vaut 0, respectivement 1, déclenche le passage à un état intermédiaire E1 ou, respectivement, le retour à l'état IDLE.

En généralisant, la réception du $(i + 1)^{\text{ième}}$ bit suivant le bit BS par la machine d'état se trouvant dans un état intermédiaire Ei, provoque le passage à un état Ei+1 ou le retour à l'état IDLE selon que le bit reçu vaut 0 ou 1.

Lorsque l'indice i vaut 9, la réception du onzième bit B10 suivant le bit BS, selon qu'il vaut 0 ou 1, déclenche le passage à un état E10 ou le retour à l'état d'attente.

Il sera noté ici que le caractère d'interruption BRK peut être détecté de toute autre manière, par exemple au moyen d'un registre à décalage de 11 bits dont tous les bits font l'objet d'une opération logique ET.

Lorsque le caractère d'interruption BRK est détecté, les caractères suivants de la trame sont tous des caractères standards composés de 10 bits. Ces caractères standards sont traités au moyen d'un organe de traitement qui est par exemple un deuxième module SWM de la machine d'état SM1.

Un exemple de réalisation du module SWM est également représenté en figure 5 et comprend tout d'abord un état TIME dans lequel le caractère de synchronisation SYNC est reçu et analysé. En effet la structure de la trame est telle que le caractère de synchronisation SYNC suit immédiatement le caractère d'interruption BRK. La fin du caractère de synchronisation SYNC détectée au moyen du bit de stop SPB provoque le passage à un état IDENT, alors qu'une erreur dans la reconnaissance de ce caractère déclenche le retour à l'état d'attente IDLE.

Dans l'état IDENT, le caractère suivant, à savoir le premier caractère d'identification CH1, est reçu et analysé. De plus, la valeur du drapeau de mise en veille WU est éventuellement modifiée.

On suppose ici que l'unité centrale a placé le circuit UART dans l'état de veille (WU=1) avant la réception de la trame de sorte que le signal DRC (fig. 4) n'a pas été émis pendant la réception des deux premiers caractères, le drapeau de mise en veille WU étant égal à 1.

Si le caractère d'identification CH1 ne correspond pas à l'identité ID du circuit UART1, le drapeau de mise en veille WU est positionné à 1 quelle que soit sa valeur courante et la machine d'état retourne à l'état d'attente IDLE. Dans une variante de réalisation, le drapeau de mise en veille WU peut être laissé à sa valeur courante (qui peut être 0 ou 1 selon la valeur imposée par le milieu extérieur) lorsque la machine d'état retourne à l'état d'attente IDLE.

Si par contre le caractère d'identification CH1 correspond bien à l'identité ID du circuit UART1, le drapeau de mise en veille WU est positionné à 0 ce qui correspond au "réveil" du circuit UART1 vis-à-vis du milieu extérieur et au passage de la machine d'état SM1 dans un état "DATA".

Dans l'état DATA, les caractères standards de données sont traités consécutivement de manière connue. Quand un caractère standard est reçu, le signal DRC est émis pour provoquer une interruption dans l'unité centrale et l'envoi de cette dernière dans un sous-programme de lecture des données reçues.

Le nombre de ces caractères étant variable, on prévoit un indicateur de longueur EOD qui vaut 1 tant qu'un nouveau caractère doit suivre et qui vaut 0 lorsque le caractère en cours de traitement est le dernier de la trame. Lorsque cet indicateur vaut 1, il provoque le bouclage sur l'état DATA. Par contre, lorsqu'il vaut 0, il déclenche le passage à l'état IDLE.

La gestion du mode veille d'un circuit quelconque étant en soi une opération à la portée de l'homme de l'art, elle ne nécessite pas de développements particuliers. Dans le mode veille, le circuit UART1 filtre de préférence tous les caractères qui ne correspondent à la séquence d'éveil, à savoir le champ d'en-tête de la trame pourvu du caractère CH1. A l'opposé, lorsque la séquence d'éveil est reconnue, l'unité centrale UC est prévenue, par exemple au moyen d'une interruption provoquée par le signal DRC.

Naturellement, le mode veille présenté ci-dessus peut se superposer à un autre mode du même type qui serait prévu par ailleurs.

La présente invention est bien entendu susceptible de diverses variantes et modes de réalisation. Notamment, toute étape ou tout moyen décrit ci-dessus peut-être remplacé par une étape ou un moyen équivalent sans sortir du cadre de la présente invention.

Par ailleurs, bien que l'on ait proposé plus haut de quitter le mode veille lorsque la machine d'état SM du circuit UART1 a vérifié que le caractère d'identification CH1 correspond bien à une identité prédéfinie ID, cette opération de vérification peut aussi être confiée à l'unité centrale. Dans ce cas, le circuit UART1 quitte le mode veille lorsqu'un caractère d'identification CH1 valide est reçu, sans vérification de son contenu, et émet le signal DRC. Après réception du signal DRC, lecture du caractère CH1 dans le circuit UART1 (registre SREG2, fig. 3) et vérification du caractère CH1, l'unité centrale UC force à nouveau le circuit UART1 dans le mode veille en mettant à 1 le drapeau WU si le caractère CH1 ne correspond pas à l'identité ID, sinon attend le prochain signal DRC pour lire le caractère suivant CH2.

## Revendications

**1.** Dispositif (UART1) récepteur de trames asynchrones débutant par un champ d'en-tête (BRK, SYNC, CH1), **caractérisé en ce qu'**il comprend :

- des moyens (SM1, WU) de basculement dans un mode veille, le mode veille comprenant le filtrage d'au moins un signal (DRC) susceptible d'être émis par le dispositif récepteur pendant la réception d'un champ d'en-tête,
- des moyens (SM1, FWM) de reconnaissance de champ d'en-tête, et
- des moyens (SM1, SWM) pour quitter le mode veille lorsqu'un champ d'en-tête valide est reconnu.

**2.** Dispositif selon la revendication 1, **caractérisé en ce que** les moyens de reconnaissance de champ d'en-tête (SM1) sont agencés pour reconnaître un champ d'en-tête valide lorsque le champ d'en-tête comprend un caractère d'interruption (BRK) composé de bits ayant tous la même valeur.

**3.** Dispositif selon l'une quelconque des revendications précédentes, **caractérisé en ce que** les moyens de reconnaissance de champ d'en-tête (SM1) sont agencés pour reconnaître un champ d'en-tête valide lorsque le champ d'en-tête comprend un caractère de synchronisation (SYNC).

**4.** Dispositif selon l'une quelconque des revendications précédentes, **caractérisé en ce que** les moyens de reconnaissance de champ d'en-tête (SM1) sont agencés pour reconnaître un champ d'en-tête valide lorsque le champ d'en-tête comprend un caractère d'identification (CH1) .

**5.** Dispositif selon l'une quelconque des revendications précédentes, **caractérisé en ce que** les moyens de reconnaissance de champ d'en-tête (SM1) sont agencés pour reconnaître un champ d'en-tête valide lorsque le champ d'en-tête comprend un caractère d'identification (CH1) correspondant à une identité (ID) du dispositif.

**6.** Dispositif selon l'une quelconque des revendications précédentes, dans lequel le mode veille est contrôlé par un drapeau (WU) pouvant être forcé à une valeur déterminée depuis l'extérieur du dispositif.

**7.** Dispositif selon l'une quelconque des revendications précédentes, dans lequel les moyens de reconnaissance de champ d'en-tête et les moyens (SM1, SWM) pour quitter le mode veille lorsqu'un champ d'en-tête valide est reconnu, comprennent une machine d'état (SM).

8. Circuit intégré, comprenant un dispositif selon l'une quelconque des revendications 1 à 7.

9. Microcontrôleur, comprenant un dispositif selon l'une quelconque des revendications 1 à 7.

10. Procédé de réception de trames asynchrones débutant par un champ d'en-tête (BRK, SYNC, CH1), **caractérisé en ce qu'**il est mis en oeuvre au moyen d'un dispositif récepteur de trames (UART1) comprenant un mode veille contrôlé par un moyen déterminé (WU), le mode veille comprenant le filtrage d'au moins un signal (DRC) susceptible d'être émis par le dispositif récepteur pendant la réception d'un champ d'en-tête, et **en ce qu'**il comprend une étape de reconnaissance de champ d'en-tête (E10, TIME, IDENT) et une action sur le moyen (WU) de contrôle du mode veille lorsqu'un champ d'en-tête est reconnu, de manière à faire sortir le dispositif récepteur du mode veille si celui-ci se trouve en mode veille.

11. Procédé selon la revendication 10, dans lequel le moyen de contrôle du mode veille comprend un drapeau (WU) et l'action sur le moyen de contrôle du mode veille comprend le fait de forcer le drapeau à une valeur déterminée.

12. Procédé selon l'une des revendications 10 et 11, dans lequel un champ d'en-tête est reconnu valide lorsqu'il comprend un caractère d'interruption (BRK) composé de bits ayant tous la même valeur.

13. Procédé selon l'une quelconque des revendications 10 à 12, dans lequel un champ d'en-tête est reconnu valide lorsqu'il comprend un caractère de synchronisation (SYNC).

14. Procédé selon l'une quelconque des revendications 10 à 13, dans lequel un champ d'en-tête est reconnu valide lorsqu'il comprend un caractère d'identification (CA1).

15. Procédé selon l'une quelconque des revendications 10 à 13, dans lequel un champ d'en-tête est reconnu valide lorsqu'il comprend un caractère d'identification (CH1) qui correspond à une identité (ID) du dispositif.

16. Procédé selon l'une quelconque des revendications 10 à 15, dans lequel les étapes de reconnaissance de champ d'en-tête (E10, TIME, IDENT) et l'action sur le moyen (WU) de contrôle du mode veille lorsqu'un champ d'en-tête est reconnu, sont effectuées au moyen d'une machine d'état (SM).

**Claims**

1. Device (UART1) for receiving asynchronous frames beginning with a header field (BRK, SYNC. CH1). **characterized in that** it comprises :

   - means (SM1, WU) for switching into a stand-by mode. the stand-by mode comprising the filtering of at least one signal (DRC) likely to be emitted by the receiver device during the reception of a header field,
   - means (SM1. FWM) for recognizing a header field, and
   - means (SM1. SWM) for leaving the stand-by mode when a valid header field is recognized.

2. Device according to claim 1, **characterized in that** the means for recognizing a header field (SM1) are arranged to recognize a valid header field when the header field comprises a break character (BRK) formed of bits having all the same value.

3. Device according to any one of the preceding claims, **characterized in that** the means for recognizing a header field (SM1) are arranged to recognize a valid header field when the header field comprises a synchronization character (SYNC).

4. Device according to any one of the preceding claims, **characterized in that** the means for recognizing a header field (SM1) are arranged to recognize a valid header field when the header field comprises an identification character (CH1).

5. Device according to any one of the preceding claims, **characterized in that** the means for recognizing a header field (SM1) are arranged to recognize a valid header field when the header field comprises an identification character (CH1) corresponding to an identity (ID) of the device.

6. Device according to any one of the preceding claims. wherein the stand-by mode is controlled by a flag (WU) which can be forced to a predetermined value from the outside of the device.

7. Device according to any one of the preceding claims, wherein the means for recognizing a header field and the means (SM1. SWM) for leaving the stand-by mode when a valid header field is recognized. comprise a state machine (SM).

8. Integrated circuit, comprising a device according to any one of the claims 1 to 7.

9. Microcontroller, comprising a device according to any one of the claims 1 to 7.

**10.** Method of receiving asynchronous frames beginning with a header field (BRK. SYNC. CH1), **characterized in that** it is implemented by means of a frame receiver device (UART1) comprising a stand-by mode controlled by a predetermined means (WU). the stand-by mode comprising the filtering of at least one signal (DRC) likely to be emitted by the receiver device during the reception of a header field. and **in that** it comprises a step of recognizing a header field (E10, TIME, IDENT) and an action on the means (WU) for controlling the stand-by mode when a header field is recognized, so as to let the receiver device leave the stand-by mode if this one is in the stand-by mode.

**11.** Method according to claim 10, wherein the means for controlling the stand-by mode comprises a flag (WU) and the action on the means for controlling the stand-by mode comprises the fact to force the flag to a predetermined value.

**12.** Method according to one of the claims 10 and 11. wherein a header field is recognized as being valid when it comprises a break character (BRK) formed of bits having all the same value.

**13.** Method according to any one of the claims 10 to 12. wherein a header field is recognized as being valid when it comprises a synchronization character (SYNC).

**14.** Method according to the any one of the claims 10 to 13. wherein a header field is recognized as being valid when it comprises an identification character (CH1).

**15.** Method according to any one of the claims 10 to 13. wherein a header field is recognized as being valid when it comprises an identification character (CH1) which corresponds to an identity (ID) of the device.

**16.** Method according to any one of the claims 10 to 15, wherein the steps of recognizing a header field (E10. TIME. IDENT) and the action on the means (WU) for controlling the stand-by mode when a header field is recognized, are performed by means of a state machine (SM).

**Patentansprüche**

**1.** Empfangsvorrichtung (UART1) asynchroner Rahmen, die mit einem Kopfteilfeld (BRK, SYNC, CH1) beginnen, **dadurch gekennzeichnet, dass** sie Folgendes umfasst:

- Mittel (SM1, WU) zum Umschalten auf einen Standby-Modus, wobei der Standby-Modus das Filtern mindestens eines Signals (DRC) umfasst, das von der Empfangsvorrichtung während des Empfangs eines Kopfteilfelds gesendet werden kann,

- Mittel (SM1, FWM) zum Erkennen des Kopfteilfelds, und

- Mittel (SM1, SWM) zum Verlassen des Standby-Modus, wenn ein gültiges Kopfteilfeld erkannt wird.

**2.** Vorrichtung nach Anspruch 1, **dadurch gekennzeichnet, dass** die Mittel zum Erkennen des Kopfteilfelds (SM1) eingerichtet sind, um ein gültiges Kopfteilfeld zu erkennen, wenn das Kopfteilfeld ein Unterbrechungszeichen (BRK) umfasst, das aus Bits besteht, die alle den gleichen Wert haben.

**3.** Vorrichtung nach einem der vorhergehenden Ansprüche, **dadurch gekennzeichnet, dass** die Mittel zum Erkennen des Kopfteilfelds (SM1) eingerichtet sind, um ein gültiges Kopfteilfeld zu erkennen, wenn das Kopfteilfeld ein Synchronisationszeichen (SYNC) enthält.

**4.** Vorrichtung nach einem der vorhergehenden Ansprüche, **dadurch gekennzeichnet, dass** die Mittel zum Erkennen des Kopfteilfelds (SM1) eingerichtet sind, um ein gültiges Kopfteilfeld zu erkennen, wenn das Kopfteilfeld ein Identifikationszeichen (CH1) umfasst.

**5.** Vorrichtung nach einem der vorhergehenden Ansprüche, **dadurch gekennzeichnet, dass** die Mittel zum Erkennen eines Kopfteilfelds (SM1) eingerichtet sind, um ein gültiges Kopfteilfeld zu erkennen, wenn das Kopfteilfeld ein Identifikationszeichen (CH1) umfasst, das einer Identität (ID) der Vorrichtung entspricht.

**6.** Vorrichtung nach einem der vorhergehenden Ansprüche, bei der der Standby-Modus von einem Flag (WU) gesteuert wird, das von außerhalb der Vorrichtung her auf einen bestimmten Wert forciert werden kann.

**7.** Vorrichtung nach einem der vorhergehenden Ansprüche, bei der die Mittel zum Erkennen des Kopfteilfelds und die Mittel (SM1, SWM) zum Verlassen des Standby-Modus, wenn ein gültiges Kopfteilfeld erkannt wird, eine Zustandsmaschine (SM) umfassen.

**8.** Integrierter Schaltkreis, der eine Vorrichtung gemäß einem der Ansprüche 1 bis 7 umfasst.

**9.** Mikrocontroller mit einer Vorrichtung gemäß einem der Ansprüche 1 bis 7.

10. Verfahren zum Empfangen von asynchronen Rahmen, die mit einem Kopfteilfeld (BRK, SYNC, CH1) beginnen, **dadurch gekennzeichnet, dass** es mittels einer Vorrichtung zum Empfangen von Rahmen (UART1) angewandt wird, die einen Standby-Modus umfasst, der von einem bestimmten Mittel (WU) gesteuert wird, wobei der Standby-Modus das Filtern mindestens eines Signals (DRC) umfasst, das von der Empfangsvorrichtung während des Empfangs eines Kopfteilfelds gesendet werden kann, und dadurch, dass es einen Erkennungsschritt des Kopfteilfelds (E10, TIME, IDENT) und eine Einwirkung auf das Mittel (WU) zum Steuern des Standby-Modus umfasst, wenn ein Kopfteilfeld erkannt wird, so dass die Empfangsvorrichtung den Standby-Modus verlässt, wenn sich diese im Standby-Modus befindet.

11. Verfahren nach Anspruch 10, bei dem das Steuermittel des Standby-Modus ein Flag (WU) umfasst und die Einwirkung auf das Mittel zum Steuern des Standby-Modus die Tatsache umfasst, das Flag auf einen bestimmten Wert zu forcieren.

12. Verfahren nach einem der Ansprüche 10 und 11, bei dem ein Kopfteilfeld als gültig erkannt wird, wenn es ein Unterbrechungszeichen (BRK) umfasst, das aus Bits besteht, die alle den gleichen Wert haben.

13. Verfahren nach einem der Ansprüche 10 bis 12, bei dem ein Kopfteilfeld als gültig erkannt wird, wenn es ein Synchronisationszeichen (SYNC) umfasst.

14. Verfahren nach einem der Ansprüche 10 bis 13, bei dem das Kopfteilfeld als gültig erkannt wird, wenn es ein Identifikationszeichen (CH1) umfasst.

15. Verfahren nach einem der Ansprüche 10 bis 13, bei dem ein Kopfteilfeld als gültig erkannt wird, wenn es ein Identifikationszeichen (CH1) umfasst, das einer Identität (ID) der Vorrichtung entspricht.

16. Verfahren nach einem der Ansprüche 10 bis 15, bei dem die Schritte des Erkennens des Kopfteilfelds (E10, TIME, IDENT) und die Einwirkung auf das Mittel zum

## Fig. 1

[55]h

## Fig. 2

## Fig. 4

**Fig. 3**

**Fig. 5**